# EUROPÄISCHE PATENTSCHRIFT

(11) **EP 2 820 695 B1**
(45) Veröffentlichungstag und Bekanntmachung des Hinweises auf die Patenterteilung: **25.05.2016**
(21) Anmeldenummer: 13702574.8
(22) Anmeldetag: 31.01.2013
(51) Int. Cl.: H01M 2/20, H01M 10/04

(54) **BATTERIE MIT EINEM VERBINDUNGSELEMENT ZUM ELEKTRISCHEN VERBINDEN VON PARALLEL GESCHALTETEN BATTERIEZELLEN**
BATTERY WITH A CONNECTING ELEMENT FOR ELECTRICALLY CONNECTING BATTERY CELLS WHICH ARE CONNECTED IN PARALLEL
BATTERIE COMPRENANT UN ÉLÉMENT DE CONNEXION PERMETTANT LA CONNEXION ÉLECTRIQUE D'ÉLÉMENTS DE BATTERIE MONTÉS EN PARALLÈLE

(30) Priorität: 28.02.2012 DE 102012003980
(43) Veröffentlichungstag der Anmeldung: 07.01.2015
(73) Patentinhaber: Audi AG, 85045 Ingolstadt (DE)
(72) Erfinder: SCHMIDT, Jörg, 85057 Ingolstadt (DE); HINTERBERGER, Michael, 85055 Ingolstadt (DE); TRACK, Andreas, 74343 Sachsenheim (DE)
(74) Vertreter: Herbst, Matthias Heinz
(86) Internationale Anmeldenummer: PCT/EP2013/000287
(87) Internationale Veröffentlichungsnummer: WO 2013/127486

(56) Entgegenhaltungen:
- DE-A1-102011 013 845
- JP-A- 2007 059 171
- JP-A- 2010 257 920
- US-A- 4 328 293

## Beschreibung

Die Erfindung betrifft eine Batterie mit einem Verbindungselement zum elektrischen Verbinden von wenigstens zwei elektrisch parallel geschalteten Batteriezellen der Batterie. Das Verbindungselement weist Kontaktstellen auf, über welche ein Grundkörper des Verbindungselements mit gleichnamigen Polen der elektrisch parallel geschalteten Batteriezellen koppelbar ist. Über einen Sammelbereich des Verbindungselements fließen im Betrieb der Batterie die elektrischen Ströme der wenigstens zwei elektrisch parallel geschalteten Batteriezellen.

Bei der Montage von Lithium-Ionen-Batterien für Traktionsanwendungen in Elektrofahrzeugen und Hybridfahrzeugen werden üblicherweise eine Vielzahl von Batteriezellen elektrisch miteinander verbunden. Hierbei werden sowohl elektrische Reihenschaltungen als auch elektrische Parallelschaltungen der Batteriezellen realisiert. Die Reihenschaltung ermöglicht das Bereitstellen einer besonders hohen Spannung, welche es in den Traktionsanwendungen ermöglicht, die gewünschte hohe Leistung zu übertragen. Durch die Parallelschaltung wird hingegen die bereitgestellte Energiemenge erhöht und damit eine entsprechend große Reichweite der Batterie ermöglicht.

Zum Verbinden der Pole oder Zellterminals der Batteriezellen werden Verbindungselemente verwendet, welche auch als Stromschienen oder Busbars bezeichnet werden. Je nach Anwendung kann es vorkommen, dass diese Stromschienen für Stromstärken von 1kA oder mehr ausgelegt werden. Dies geht mit einer entsprechend massiven Ausführung der Stromschienen einher. Die durch den vergleichsweise großen Leitungsquerschnitt bedingte massive Ausführung der Stromschiene führt jedoch zu einem erheblichen Gewicht derselben und einem hohen Materialeinsatz sowie damit verbunden hohen Kosten.

Beispielsweise aus der DE 10 2009 053 344 A1 sind Verbindungselemente bekannt, mittels welchen die einzelnen Batteriezellen einer Batterie elektrisch miteinander gekoppelt werden. Die Verbindungselemente werden dort als Batteriezellenverbinder bezeichnet.

Die DE 10 2006 049 603 A1 beschreibt einen Zellenverbinder zum elektrischen Kontaktieren von flächigen Stromquellen in Form von Solarzellen. Der zu seiner Mitte hin breiter werdende Zellenverbinder kontaktiert die jeweilige Solarzelle über mehrere Kontaktbereiche. Die Verbindung zwischen jeweils zwei Kontaktbereichen des Zellenverbinders wird in Bezug auf das Elastizitätsmodul beispielsweise durch Querschnittsverringerung geschwächt. Bevorzugt sind mindestens zwei, besser jedoch drei bis zehn Kontaktbereiche vorgesehen, um sowohl eine mechanische Stabilität als auch Flexibilität und einen Spannungsabbau im Zellenverbinder zu erreichen.

Die AT 42 867 beschreibt eine Blei-Säure-Batteriezelle, welche eine Vielzahl positiver Platten enthält, welche mit negativen Platten abwechselnd unter Zwischenschaltung eines Separatormaterials in der Batteriezelle angeordnet sind. Die einzelnen positiven Platten sind als sogenannte Röhrenplatten ausgebildet, bei welchen horizontal angeordnete Röhren einen in positives aktives Material eingebetteten leitfähigen Dorn aus einer Bleilegierung umfassen. Alle leitfähigen Dorne einer Röhrenplatte sind an einem Ende mit einer Stromsammelschiene verbunden. Die Querschnittsfläche der Stromsammelschiene nimmt gegen das untere Ende der Platte ab, wodurch sichergestellt wird, dass die Stromdichte in der Stromsammelschiene über ihre gesamte Höhe konstant ist.

Die DE 10 2011 013 845 A1 offenbart eine Batterie mit einer Mehrzahl von prismatischen Batteriezellen. Die Pole jeweils dreier benachbarter Batteriezellen sind über eine Stromschiene elektrisch parallel geschaltet, wobei zwei Gruppen solcher elektrisch parallel geschalteter Batteriezellen mittels der Stromschiene elektrisch in Reihe geschaltet sind. Die Stromschiene umfasst einen Hauptkörper, an dem mehrere Buchsen angeordnet sind, und im zentralen Sammelbereich der Stromschiene befindet sich ein Anschluss.

Darüber hinaus beschreiben die Dokumente JP 2010-58920 A und JP 2007-59171 A elektrische Verbindungselemente , welche von dem Sammelbereich zu einem Endbereich des Verbindungselements hin einen verjüngenden Leitungsquerschnitt aufweisen.

Aufgabe der vorliegenden Erfindung ist es, eine Batterie mit einem Verbindungselement der eingangs genannten Art zu schaffen, mittels welcher sich eine Gewichtseinsparung erreichen lässt.

Diese Aufgabe wird durch eine Batterie mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei der erfindungsgemäßen Batterie weist das Verbindungselement einen sich von dem Sammelbereich zu einem Endbereich des Verbindungselements hin verjüngenden Leitungsquerschnitt auf. Durch das Bereitstellen eines sich von dem Endbereich hin zu dem Sammelbereich vergrößernden Leitungsquerschnitts wird erreicht, dass innerhalb des Verbindungselements eine gleichmäßige Stromdichte, also eine gleichmäßige Stromstärke je Flächeneinheit vorliegt. Es liegt nämlich bei Betrieb der Batterie im Verbindungselement die höchste Stromstärke dort vor, wo dieses den größten Leitungsquerschnitt aufweist, nämlich im Sammelbereich. Demgegenüber nimmt die Stromstärke zum Endbereich des Verbindungselements hin ab. Folglich ist die Stromschiene vorliegend so ausgebildet, dass sie sich ausgehend vom Sammelbereich hin zum Endbereich verjüngt.

Diese Gestaltung des Verbindungselements führt auch dazu, dass die einzelnen durch das Verbindungselement parallel geschalteten Batteriezellen im Betrieb der Batterie homogener belastet werden als bei Verwendung eines Verbindungselements mit konstantem Leitungsquerschnitt. Bei einem Verbindungselement mit konstantem Leitungsquerschnitt können sich nämlich aufgrund der Parallelschaltung der Batteriezellen für den Strom bevorzugte Wege durch das Verbindungselement ergeben, die dann zu einer inhomogenen Belastung der parallel geschalteten Batteriezellen führen. Solche bevorzugten Wege des Stroms sind bedingt durch den Innenwiderstand der Batteriezellen, den Übergangswiderstand zwischen dem Verbindungselement und dem jeweiligen Pol der Batteriezelle und durch den jeweiligen Widerstand in Bereichen des Verbindungselements.

Bei dem Verbindungselement ist hierbei in dem Endbereich der Leitungsquerschnitt auf einen Bruchteil des im Sammelbereich vorliegenden Leitungsquerschnitts verringert. Dieser Bruchteil entspricht einem Stammbruch mit der Anzahl der den gleichnamigen Polen der elektrisch parallel geschalteten Batteriezellen zugeordneten Kontaktstellen im Nenner.

Wenn also über zwei Kontaktstellen des Verbindungselements die gleichnamigen Pole von zwei elektrisch parallel geschalteten Batteriezellen miteinander koppelbar sind, so wird der Leitungsquerschnitt zum Endbereich hin auf die Hälfte, also den Stammbruch 1/2 verringert. Bei drei Kontaktstellen für drei elektrisch parallel geschaltete Batteriezellen wird entsprechend eine Verringerung des Leitungsquerschnitts im Endbereich auf ein Drittel gegenüber dem Sammelbereich realisiert.

Das Verbindungselement kann hierbei eine konstante Höhe und eine zu den Endbereichen hin abnehmende Breite aufweisen. Dies ist im Hinblick auf die Herstellung des Verbindungselements vorteilhaft. Das Verbindungselement kann jedoch auch bei zumindest im Wesentlichen konstanter Breite eine vom Sammelbereich zu den Endbereichen hin abnehmende Höhe aufweisen. Dies erleichtert die Montage des Verbindungselements.

Zweckmäßigerweise wird jedoch bei einer besonders großen Anzahl an elektrisch parallel geschalteten Batteriezellen im Endbereich zumindest ein Leitungsquerschnitt vorgesehen, welcher die für die bequeme Kontaktierung des elektrischen Pols der letzten Batteriezelle vorzusehende Fläche aufweist.

Es tritt also keine stark unterschiedliche Stromdichteverteilung innerhalb des Verbindungselements auf, wie dies der Fall ist, wenn das Verbindungselement über seine gesamte Länge hin einen gleichbleibenden Leitungsquerschnitt aufweist. Dadurch, dass in von dem Sammelbereich beabstandeten Bereichen des Verbindungselements ein geringerer Leitungsquerschnitt vorliegt, lässt sich zudem eine Verringerung des Gewichts des Verbindungselements erreichen im Vergleich zu einem herkömmlichen Verbindungselement, welches über seine gesamte Länge den gleichbleibenden Leitungsquerschnitt aufweist. Durch den verringerten Materialeinsatz werden auch Materialkosten gespart.

Durch das Verwenden eines solchen, zu einer homogeneren Belastung der Batteriezellen führenden Verbindungselements für eine Batterie lässt sich deren Kapazität voll ausschöpfen. Wenn die Batterie in einem Elektrofahrzeug oder Hybridfahrzeug zum Einsatz kommt, so lässt sich auf diese Weise eine besonders große Reichweite des Fahrzeugs sicherstellen, also eine besonders lange Fahrstrecke, welche das Fahrzeug rein elektrisch oder mit Unterstützung eines elektrischen Antriebsaggregats zurücklegen kann. Des Weiteren lässt sich durch Verwenden des Verbindungselements in der Batterie eine besonders lange Lebensdauer derselben erreichen.

Zudem ist die gleichmäßige Stromdichteverteilung innerhalb des Verbindungselements günstig, da das Verbindungselement nicht lokal stark belastet wird. Darüber hinaus ist bei gleicher Verlustleistung gegenüber der herkömmlichen Geometrie des Verbindungselements, welches über seine gesamte Länge einen gleichbleibenden Leitungsquerschnitt aufweist, ein verringertes Gewicht des Verbindungselements erreicht. Dies ist insbesondere von Vorteil, wenn die Batterie in einem Fahrzeug wie dem Elektrofahrzeug oder dem Hybridfahrzeug zum Einsatz kommen soll.

In einer vorteilhaften Ausgestaltung der Erfindung weist das Verbindungselement einen sich zu dem Endbereich hin kontinuierlich verringernden Leitungsquerschnitt auf. So kann besonders gut dem Ziel Rechnung getragen werden, im Betrieb der Batterie eine konstante Stromdichte innerhalb des Verbindungselements zu erreichen.

Das Verbindungselement kann dazu ausgelegt sein, die wenigstens zwei elektrisch parallel geschalteten Batteriezellen über den Sammelbereich mit wenigstens zwei weiteren elektrisch parallel geschalteten Batteriezellen der Batterie elektrisch in Reihe zu schalten. Bei einer solchen Ausgestaltung ist durch den Sammelbereich ein Übertrittsbereich bereitgestellt, an welchem im Betrieb der Batterie der von einer ersten Gruppe von parallel geschalteten Batteriezellen kommende Strom hin zu einer zweiten Gruppe von parallel geschalteten Batteriezellen übertritt. Durch eine derartige Serienschaltung von Gruppen jeweils parallel geschalteter Batteriezellen in der Batterie lässt sich eine besonders hohe Spannung generieren, wie sie insbesondere bei Verwendung der Batterie in einem Fahrzeug vorteilhaft ist.

Für eine einfache und kostengünstige Fertigung sowie für die Montage des Verbindungselements ist es vorteilhaft, wenn dieses in Bezug auf wenigstens eine durch den Sammelbereich verlaufende Mittelebene symmetrisch ausgebildet ist.

Die Kontaktstellen können insbesondere als in dem Grundkörper des Verbindungselements vorgesehene Durchtrittsöffnungen ausgebildet sein. Dann lassen sich die gleichnamigen Pole der elektrisch parallel geschalteten Batteriezellen besonders einfach und sicher über die Durchtrittsöffnungen kontaktieren. Hierfür kann ein Kopfbereich einen jeweiligen Pols der Batteriezelle in die Durchtrittsöffnungen eingesteckt werden. Alternativ kann in die Durchtrittsöffnungen jeweils ein Stift oder eine Schraube aus einem elektrisch leitfähigen Material eingebracht und mit dem Pol verbunden werden.

Bei der erfindungsgemäßen Batterie liegt innerhalb des Verbindungselements eine im Wesentlichen konstante Stromdichte vor. Es fließt zudem im Betrieb der Batterie durch die Batteriezellen ein zumindest annähernd gleicher Strom. Dadurch, dass so lokale Überlastungen von einzelnen Batteriezellen vermieden werden, lässt sich eine besonders lange Lebensdauer der Batterie erreichen. Zudem wird durch das Verbindungselement, welches den sich zum Endbereich hin verjüngenden Querschnitt aufweist, eine Gewichtseinsparung im Vergleich zu einem über die gesamte Länge einen gleichbleibenden Leitungsquerschnitt aufweisenden Verbindungselement erreicht.
Dies ist insbesondere dann günstig, wenn die Batterie in einem Elektrofahrzeug oder Hybridfahrzeug zum Einsatz kommen soll, um dort Energie für ein elektrisches Antriebsaggregat des Fahrzeugs bereitzustellen. Die Batterie kann hierbei insbesondere als Hochvoltbatterie ausgebildet sein. Jedoch ist auch ein Einsatz der Batterie für Anwendungen möglich, bei welchen eine Spannung von weniger als 60 V von der Batterie geliefert werden soll.
Die Batterie kann insbesondere prismatische Batteriezellen aufweisen, welche einen Stapel bilden. In dem Stapel sind bevorzugt die gleichnamigen Pole wenigstens zweier erster elektrisch parallel geschalteter Batteriezellen und wenigstens zweier weiterer elektrisch parallel geschalteter Batteriezellen, welche mit den ersten Batteriezellen elektrisch in Reihe geschaltet sind, miteinander fluchtend angeordnet. Dann lässt sich fertigungstechnisch besonders einfach über die Kontaktstellen des Verbindungselements eine Anbringung desselben an die Pole realisieren.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung welche durch die angefügten Ansprüchen definiert ist zu verlassen.

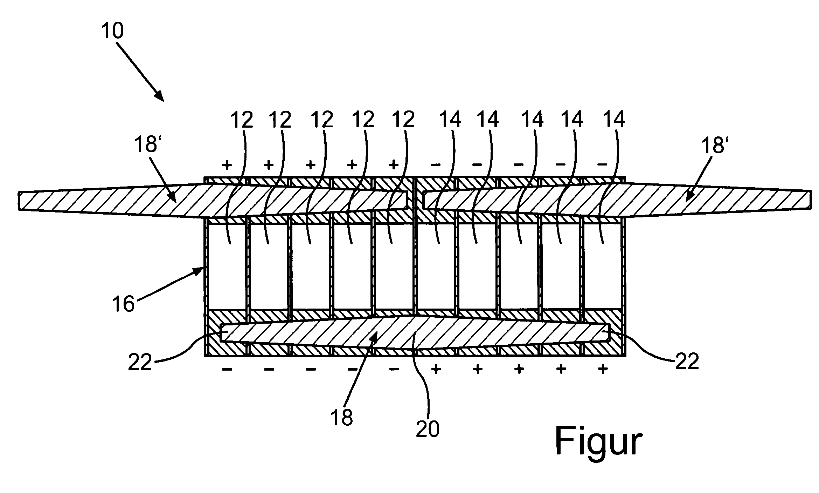

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisch eine Batterie für ein Fahrzeug, bei welcher Gruppen von elektrisch parallel geschalteten Batteriezellen mittels einer Stromschiene elektrisch in Reihe geschaltet sind.

Eine in der Figur gezeigte Batterie 10 für ein Fahrzeug umfasst eine erste Gruppe von Batteriezellen 12, welche elektrisch parallel geschaltet sind. Bei einer zweiten Gruppe von Batteriezellen 14 sind ebenfalls die einzelnen Batteriezellen 14 elektrisch parallel geschaltet. Die erste Gruppe der Batteriezellen 12 ist mit der zweiten Gruppe der Batteriezellen 14 wiederum elektrisch in Reihe geschaltet.

Diese Parallelschaltungen und die Reihenschaltung der - vorliegend prismatischen - Batteriezellen 12, 14 wird erreicht, indem die parallel zu schaltenden Batteriezellen 12 der ersten Gruppe mit gleicher Polaritätsausrichtung nebeneinander angeordnet werden. Es liegen dann die jeweils gleichnamigen Pole miteinander fluchtend in einem Stapel 16 der Batteriezellen 12, 14 vor. Die nächste, mit der ersten Gruppe in Reihe zu verbindende Gruppe an Batteriezellen 14 weist hingegen eine umgekehrte Polaritätsausrichtung auf. Es sind jedoch auch hier die gleichnamigen Pole miteinander fluchtend angeordnet, sodass in dem Zellstapel 16 die Minuspole der ersten Gruppe der Batteriezellen 12 mit den Pluspolen der zweiten Gruppe der Batteriezellen 14 in einer Reihe zu liegen kommen.

Diese in einer Reihe angeordneten Pole der Batteriezellen 12, 14 werden durch eine durchgehende Stromschiene 18 miteinander verbunden, durch welche somit sowohl die Parallelschaltung der einzelnen Batteriezellen 12 innerhalb der ersten Gruppe und die Parallelschaltung der Batteriezellen 14 innerhalb der zweiten Gruppe als auch die Reihenschaltung der ersten Gruppe mit der zweiten Gruppe realisiert ist.

Innerhalb der Stromschiene 18 ist im Betrieb der Batterie 10 die Stromstärke nicht gleichmäßig verteilt. Vielmehr liegt in einem Zentralbereich oder Sammelbereich 20 der Stromschiene 18 die größte Stromstärke vor, nämlich an der Stelle, an welcher die erste Gruppe der Batteriezellen 12 und die zweite Gruppe der Batteriezellen 14 aneinander angrenzen und durch die Stromschiene 18 elektrisch gekoppelt sind.

Zu Endbereichen 22 der Stromschiene 18 hin nimmt die Stromstärke jedoch ab. Daher ist es zum Erreichen einer im Wesentlichen konstanten Stromdichteverteilung innerhalb der Stromschiene 18 ausreichend, wenn die Stromschiene 18 in ihren Endbereichen 22 einen geringeren Leitungsquerschnitt bereitstellt als im zentralen Sammelbereich 20. Entsprechend verjüngt sich die Stromschiene 18 vorliegend ausgehend vom Sammelbereich 20 zu den jeweiligen Endbereichen 22 hin kontinuierlich.

Im Betrieb tritt die gesamte Stromstärke, welche die Gruppen der Batteriezellen 12, 14 bereitstellen, im Sammelbereich 20 auf. An dieser Übergangsstelle von den gleichnamigen Polen der ersten Gruppe der Batteriezellen 12 zu den gleichnamigen Polen der zweiten Gruppe der Batteriezellen 14 fließt also im Betrieb der gesamte Strom, während an den Endbereichen 22 lediglich ein Bruchteil der Stromstärke vorliegt.

Bei der in der Figur gezeigten Stromschiene 18 ist daher der jeweilige Leitungsquerschnitt im Endbereich 22 auf einen Bruchteil des Leitungsquerschnitts im Sammelbereich 20 verringert, welcher die Anzahl der je Gruppe parallel geschalteten Batteriezellen 12, 14 berücksichtigt.

Vorliegend sind beispielhaft fünf Batteriezellen 12 in der ersten Gruppe parallel geschaltet und fünf weitere Batteriezellen 14 in der zweiten Gruppe. Entsprechend ist im Endbereich 22 der Leitungsquerschnitt der Stromschiene 18 auf ein Fünftel des Leitungsquerschnitts im Sammelbereich 20 reduziert. Dies bringt im Vergleich zu einer Stromschiene, welche über ihre gesamte Länge einen gleich bleibenden, dem Querschnitt im Sammelbereich 20 entsprechenden Leitungsquerschnitt aufweist, eine beträchtliche Gewichtsersparnis und Materialersparnis mit sich. Dies geht auch mit einer Kosteneinsparung einher.

Bei der Verringerung des Leitungsquerschnitts der Stromschiene 18 zu den Endbereichen 22 hin wird darauf geachtet, dass stets eine ausreichend große Fläche zur raschen und aufwandsarmen Kontaktierung der Pole oder Zellterminals der Batteriezellen 12, 14 zur Verfügung steht.

Wenn in einer alternativen Ausführungsform weniger als die vorliegend beispielhaft gezeigten fünf Batteriezellen 12, 14 je Gruppe parallel geschaltet in dem Stapel 16 angeordnet sind, so wird auch entsprechend der Leitungsquerschnitt in den Endbereichen 22 auf den Bruchteil verringert, welcher einem Stammbruch mit der Anzahl der elektrisch parallel geschalteten Batteriezellen 12, 14 im Nenner entspricht.

Beispielsweise kann bei zwei parallel geschalteten Batteriezellen 12 der Leitungsquerschnitt im Endbereich 22 auf die Hälfte des im Sammelbereich 20 vorliegenden Leitungsquerschnitts verringert werden. Bei drei parallel geschalteten Batteriezellen 12 pro Gruppe wird entsprechend eine Verringerung des Leitungsquerschnitts auf ein Drittel vorgenommen. Hierbei wird bevorzugt der Leitungsquerschnitt im Sammelbereich 20 auf eine Größe bemessen, welche im Betrieb der Batterie 10 gerade eben das Bereitstellen einer gewünschten maximalen Stromstärke der Batterie 10 ermöglicht.

Bei der Batterie 10 sind in der Figur weitere, analog aufgebaute Stromschienen 18' gezeigt, welche die der ersten Stromschiene 18 gegenüberliegenden Pole der Batteriezellen 12, 14 mit den Polen weiterer (vorliegend nicht gezeigter) Batteriezellen der Batterie 10 koppeln.

## Patentansprüche

1. Batterie mit einem Verbindungselement zum elektrischen Verbinden von wenigstens zwei elektrisch parallel geschalteten Batteriezellen (12, 14) der Batterie (10) mit Kontaktstellen, über welche ein Grundkörper des Verbindungselements (18) mit gleichnamigen Polen der elektrisch parallel geschalteten Batteriezellen (12, 14) gekoppelt ist, und mit einem Sammelbereich (20), über welchen im Betrieb der Batterie (10) die elektrischen Ströme der wenigstens zwei elektrisch parallel geschalteten Batteriezellen (12, 14) fließen,
wobei prismatische Batteriezellen (12, 14) der Batterie (10) einen Stapel (16) bilden, in welchem die gleichnamigen Pole wenigstens zweier erster elektrisch parallel geschalteter Batteriezellen (12) und wenigstens zweier weiterer elektrisch parallel geschalteter Batteriezellen (14), welche mit den ersten Batteriezellen (12) elektrisch in Reihe geschaltet sind, miteinander fluchtend angeordnet sind,
wobei das Verbindungselement (18) über die Kontaktstellen an die Pole der Batteriezellen (12, 14) angebracht ist,
und wobei das Verbindungselement (18) dazu ausgelegt ist, die wenigstens zwei ersten elektrisch parallel geschalteten Batteriezellen (12) über den Sammelbereich (20) mit den wenigstens zwei weiteren elektrisch parallel geschalteten Batteriezellen (14) der Batterie (10) elektrisch in Reihe zu schalten,
**dadurch gekennzeichnet, dass**
das Verbindungselement (18) einen sich von dem Sammelbereich (20) zu einem Endbereich (22) des Verbindungselements (18) hin verjüngenden Leitungsquerschnitt aufweist, wobei in dem Endbereich (22) der Leitungsquerschnitt auf einen Bruchteil des Leitungsquerschnitts im Sammelbereich (20) verringert ist, welcher einem Stammbruch mit der Anzahl der den gleichnamigen Polen der elektrisch parallel geschalteten Batteriezellen (12, 14) zugeordneten Kontaktstellen im Nenner entspricht.

2. Batterie nach Anspruch 1,
**dadurch gekennzeichnet, dass**
das Verbindungselement (18) einen sich zu dem Endbereich (22) hin kontinuierlich verringernden Leitungsquerschnitt aufweist.

3. Batterie nach Anspruch 1 oder 2,
**dadurch gekennzeichnet, dass**
das Verbindungselement (18) in Bezug auf wenigstens eine durch den Sammelbereich (20) verlaufende Mittelebene symmetrisch ausgebildet ist.

4. Batterie nach einem der Ansprüche 1 bis 3,
**dadurch gekennzeichnet, dass**
die Kontaktstellen als in dem Grundkörper des Verbindungselements (18) vorgesehene Durchtrittsöffnungen ausgebildet sind.

5. Batterie nach einem der Ansprüche 1 bis 4,
**dadurch gekennzeichnet, dass**
die Batterie (10) als Hochvoltbatterie ausgebildet ist.

## Claims

1. Battery with a connection element for electrically connecting at least two battery cells (12, 14) electrically connected in parallel of the battery (10) with contact points via which a basic body of the connection element (18) is coupled with the same named poles of the battery cells (12, 14) electrically connected in parallel and with a collector area (20), via which during operation of the battery (10) the electrical currents of the at least two battery cells (12, 14) electrically connected in parallel flow,
wherein prismatic battery cells (12, 14) of the battery (10) form a stack (16) in which the poles of the same name of at least two first battery cells (12) electrically connected in parallel and of at least two further battery cells (14) electrically connected in parallel which are electrically connected in series with the first battery cells (12) are arranged flush with each other,
wherein the connection element (18) is applied via the contact points to the poles of the battery cells (12, 14),
and wherein the connection element (18) is designed to electrically connect in series the at least two first battery cells (12) connected in parallel, via the collector area (20), with the at least two further battery cells (14) of the battery (10) electrically connected in parallel,
**characterised in that**
the connection element (18) has a conductor cross-section which tapers from the collector area (20) towards an end area (22) of the connection element (18), wherein in the end area (22) the conductor cross-section is reduced to a fraction of the conductor cross-section in the collector area (20), which corresponds to a unit fraction in which the denominator is formed by the number of contact points allocated to the poles of the same name of the battery cells (12, 14) electrically connected in parallel.

2. Battery according to claim 1
**characterised in that**
the connection element (18) has a conductor cross-section which tapers continuously towards the end area (22).

3. Battery according to claim 1 or 2
**characterised in that**
the connection element (18) is symmetrical in relation to at least one central plane which extends through the collector area (20).

4. Battery according to any one of claims 1 to 3
**characterised in that**
the contact points are designed as through openings which are provided in the basic body of the connection element (18).

5. Battery according to any one of claims 1 to 4
**characterised in that**
the battery (10) is in the form of a high voltage battery.

## Revendications

1. Batterie avec un élément de liaison pour la liaison électrique d'au moins deux cellules de batterie (12, 14), branchées électriquement en parallèle, de la batterie (10) avec des points de contact par l'intermédiaire desquels un corps de base de l'élément de liaison (18) est couplé à des pôles de même signe des cellules de batterie (12, 14) branchées électriquement en parallèle, et avec une zone collectrice (20) par l'intermédiaire de laquelle passent les courants électriques des au moins deux cellules de batterie (12, 14) branchées électriquement en parallèle lors du fonctionnement de la batterie (10),
dans laquelle des cellules de batterie prismatiques (12, 14) de la batterie (10) forment une pile (16) dans laquelle les pôles de même signe d'au moins deux premières cellules de batterie (12) branchées électriquement en parallèle et d'au moins deux autres cellules de batterie (14) branchées électriquement en parallèle, qui sont branchées électriquement en série avec les premières cellules de batterie (12), sont agencés alignés les uns avec les autres,
dans laquelle l'élément de liaison (18) est appliqué aux pôles des cellules de batterie (12, 14) par l'intermédiaire des points de contact,
et dans laquelle l'élément de liaison (18) est conçu pour brancher électriquement en série les au moins deux premières cellules de batterie (12) branchées électriquement en parallèle avec les au moins deux autres cellules de batterie (14) branchées électriquement en parallèle de la batterie (10) par l'intermédiaire de la zone collectrice (20),
**caractérisée en ce que**
l'élément de liaison (18) a une section transversale de conducteur qui se rétrécit en allant de la zone collectrice (20) à une zone d'extrémité (22) de l'élément de liaison (18), la section transversale de conducteur étant réduite dans la zone d'extrémité (22) à une fraction de la section transversale de conducteur dans la zone collectrice (20), fraction qui correspond à une fraction unitaire avec au dénominateur le nombre des points de contact associés aux pôles de même signe des cellules de batterie (12, 14) branchées électriquement en parallèle.

2. Batterie selon la revendication 1, **caractérisée en ce que** l'élément de liaison (18) a une section transversale de conducteur qui se réduit de manière continue en allant vers la zone d'extrémité (22).

3. Batterie salon la revendication 1 ou 2, **caractérisée en ce que** l'élément de liaison (18) est conçu symétrique par rapport à au moins un plan médian s'étendant à travers la zone collectrice (20).

4. Batterie selon l'une des revendications 1 à 3, **caractérisée en ce que** les points de contact sont conçus comme des ouvertures de passage prévues dans le corps de base de l'élément de liaison (18).

5. Batterie selon l'une des revendications 1 à 4, **caractérisée en ce que** la batterie (10) est conçue comme une batterie à haute tension.
